# EUROPÄISCHE PATENTSCHRIFT

(11) **EP 2 086 798 B1**
(45) Veröffentlichungstag und Bekanntmachung des Hinweises auf die Patenterteilung: **13.01.2010**
(21) Anmeldenummer: 08803415.2
(22) Anmeldetag: 29.08.2008
(51) Int. Cl.: B60R 21/20, B60R 21/235, B60R 21/237

(54) **VERFAHREN ZUR HERSTELLUNG EINES GASSACKPAKETS FÜR EIN AIRBAGMODUL**
METHOD FOR MANUFACTURING AN AIR BAG PACKET FOR AN AIR BAG MODULE
PROCÉDÉ POUR FABRIQUER UN SAC GONFLABLE FORMANT PAQUET POUR UN MODULE DE COUSSIN GONFLABLE DE PROTECTION

(30) Priorität: 12.09.2007 DE 102007043936
(43) Veröffentlichungstag der Anmeldung: 12.08.2009
(73) Patentinhaber: Takata-Petri AG, 63743 Aschaffenburg (DE)
(72) Erfinder: GLAAB, Ralf, 63829 Krombach (DE); HAMELS, Stefan, 63743 Aschaffenburg (DE)
(74) Vertreter: Müller, Wolfram Hubertus
(86) Internationale Anmeldenummer: PCT/EP2008/061427
(87) Internationale Veröffentlichungsnummer: WO 2009/033962

(56) Entgegenhaltungen:
- EP-A- 1 803 613
- WO-A-2007/009416
- WO-A-2007/118699

## Beschreibung

### Beschreibung

Die Erfindung betrifft ein Verfahren zur Herstellung eines zumindest einen Gassack und eine den Gassack umgebende Schutzhülle aufweisenden Gassackpaketes für ein Airbagmodul, eine Faltvorrichtung und einer Gassackpaket.

EP 1 803 613 A1 offenbart ein gattungsgemäßes Verfahren, eine gattungsgemäße Faltvorrichtung und ein gattungsgemäßes Gassackpaket.

Der Erfindung liegt das Problem zugrunde, ein Verfahren der vorgenannten Art zu verbessern.

Dieses Problem wird durch ein Verfahren zur Herstellung eines Gassackpaketes mit den Merkmalen des Anspruchs 1 gelöst.

Danach umfasst das erfindungsgemäße Verfahren die folgenden Schritte: Überdecken der Ausnehmung des ersten Werkzeuges mit einem flach ausgebreiteten, ersten Schutzhüllenteil als einem Element der Schutzhülle, Zusammenfalten des Gassackes vor der überdeckten Ausnehmung, und Einführen des zusammengefalteten Gassackes in die Ausnehmung, so dass das erste Schutzhüllenteil zwischen dem Gassack und einer die Ausnehmung begrenzenden Wandung der Ausnehmung angeordnet wird.

Durch das erfindungsgemäße Verfahren wird ein Vorformen der Bestandteile der Schutzhülle (erstes Schutzhüllenteil) verzichtbar. Bevorzugt ist die Schutzhülle bzw. deren Schutzhüllenteile dehnbar ausgebildet. Besonders bevorzugt ist das erste Schutzhüllenteil bzw. die Schutzhülle flexibel und elastisch (rückstellfähig) ausgebildet und wird vorzugsweise durch eine Folie gebildet. Die Dehnfähigkeit des ersten Schutzhüllenteils (bzw. der Schutzhülle) liegt vorzugsweise bei 300% und darüber. Eine Dehnfähigkeit von 600 % und darüber ist ebenso vorteilhaft. Die Schutzhülle erreicht daher ihre endgültige Form erst nach dem Evakuieren. Dabei schrumpft bzw. dehnt sie sich beim Evakuieren der Schutzhülle soweit, dass sie die Form des gefalteten Gassackes annimmt, d.h., sie kann mit dem Außenraum kommunizierende oder an der Oberfläche des gefalteten Gassackes befindliche Hohlräume ausfüllen, so dass annähernd keine Luft im Gassackpaket verbleibt. Elastisch bzw. rückstellfähig bedeutet insbesondere, dass die Schutzhülle dazu tendiert, einen nicht gedehnten Ausgangszustand einzunehmen.

Vorzugsweise wird der oberhalb der Ausnehmung zusammengeraffte Gassack mittels eines zweiten Werkzeuges in die besagte Ausnehmung des ersten Werkzeuges gedrückt. Bevorzugt wird hierzu zunächst das erste Schutzhüllenteil an dem ersten Werkzeug fixiert, so dass es die Ausnehmung überdeckt. Dies bewirkt, dass das erste Schutzhüllenteil beim Drücken des Gassackpaketes in die Ausnehmung unter Dehnung des ersten Schutzhüllenteils in der Ausnehmung angeordnet wird und sich dabei bevorzugt an eine die Ausnehmung begrenzende Wandung anschmiegt. Ferner wird das erste Schutzhüllenteil gegen den Gassack vorgespannt.

Es ist auch möglich, das erste Schutzhüllenteil nicht am ersten Werkzeug zu fixieren, so dass das erste Schutzhüllenteil beim Einführen des Gassackes in die Ausnehmung in jene Ausnehmung nachrutscht.

Zum Verschließen der Schutzhülle dient ein zweites Schutzhüllenteil der Schutzhülle, das vorzugsweise die gleichen Eigenschaften aufweist wie das erste Schutzhüllenteil und das zum Verschließen der Schutzhülle an einer der Ausnehmung zugewandten Oberfläche des zweiten Werkzeuges angeordnet wird, so dass das zweite Schutzhüllenteil beim Bewegen des zweiten Werkzeuges in Richtung auf das erste Werkzeug gegen den zusammengefalteten Gassack gedrückt wird. Dabei wird ein Anlagebereich der besagten Oberfläche des zweiten Werkzeuges unter Zwischenlage eines umlaufenden äußersten Randbereichs des zweiten Schutzhüllenteils und eines umlaufenden äußersten Randbereichs des ersten Schutzhüllenteils gegen einen die Ausnehmung begrenzenden Anlagebereich des ersten Werkzeuges gedrückt, so dass die beiden Randbereiche gegeneinander gedrückt werden und der Gassack zwischen den beiden Schutzhüllenteilen eingeschlossen wird.

Hiernach werden die Randbereiche der beiden Schutzhüllenteile miteinander verbunden, insbesondere durch Verschweißen oder verkleben. Hiezu können die Anlagebereiche partiell erhitzbar ausgebildet sein.

Vorzugsweise ragt von einem Boden der Ausnehmung des ersten Werkzeuges ein Bereich zum Erzeugen einer Eindrückung des Gassackpaketes ab. D.h., beim Einführen des Gassackes in die Ausnehmung des ersten Werkzeuges (unter Zwischenlage des ersten Schutzhüllenteils) wird das erste Schutzhüllenteil gegen jenen abragenden Bereich gedrückt, so dass eine der Form jenes Bereiches entsprechende Eindrückung am ersten Schutzhüllenteil und dem dahinter angeordneten Gassack ausgebildet wird. Die Höhe des besagten Bereiches in Bezug auf den Boden der Ausnehmung des ersten Werkzeuges bestimmt dabei die Tiefe der Eindrückung des Gassackpaketes.

Um die Eindrückung hinsichtlich ihrer Tiefe im Gassackpaket an die jeweiligen gewünschten Gegebenheiten anpassen zu können, ist die Höhe des abragenden Bereichs gegenüber dem Boden der Ausnehmung vorzugsweise variabel einstellbar. Dies kann beispielsweise durch eine stufenlose oder gestufte Bewegung des abragenden Bereichs gegenüber dem Boden erfolgen, wobei diese Bewegung im Wesentlichen senkrecht zu einer Grundfläche des Bodens verläuft. Das heißt, in dieser Ausgestaltung der Erfindung ist der abragende Bereich in unterschiedlicher Weise in die Ausnehmung einfahrbar oder aus der Ausnehmung ausfahrbar ausgestaltet.

Um eine bessere Anpassungsfähigkeit der Dimensionen der Ausnehmung an unterschiedlich große herzustellende Gassackpakete zu ermöglichen, kann der Querschnitt der Ausnehmung vorzugsweise durch das Einbringen eines Begrenzungselements verringert werden. Dieses Einbringen erfolgt vorzugsweise vor einem Verschweißen der Schutzhülle des Gassackpakets, um eine Größenanpassung des herzustellenden Gassackpakets an die verringerte Größe der formgebenden Ausnehmung zu ermöglichen. Durch den Einsatz eines Begrenzungselements ist es auch möglich, dass die Ausnehmung deutlich größer als die gewünschte Größe des Gassackpakets ist. Dessen eigentliche Größe wird dann (zumindest in zwei Dimensionen) durch das Begrenzungselement bestimmt.

Des Weiteren kann vor dem Zusammenfalten des Gassackes ein Diffusor zum Verwirbeln eines Gasstroms durch eine Einströmöffnung des Gassackes hindurch in einem Innenraum des Gassackes angeordnet werden. Der Diffusor weist eine konvexe Form auf, die der späteren Eindrückung des Gassackpaketes entspricht, d.h., der Diffusor umgibt die besagte Eindrückung.

Damit die Schutzhülle beim Aufblasen des Gassackes kontrolliert aufreißen kann, wird bevorzugt mittels des zweiten Werkzeuges eine Aufreißlinie am zweiten Schutzhüllenteil ausgebildet. Hierzu kann das zweite Werkzeug die Aufreißlinie mechanisch oder durch Erhitzen des zweiten Schutzhüllenteils in die Schutzhülle (zweites Schutzhüllenteil) einprägen.

Um das Gassackpaket zu kompaktifizieren, wird die Schutzhülle vor dem Verschließen der Schutzhülle evakuiert, wobei sich die Schutzhülle unter Dehnung eng an den zusammengefalteten Gassack anschmiegt. Evakuieren bedeutet, dass in der Schutzhülle ein Druck bereitgestellt wird, der wesentlich geringer ist als der Luftdruck der das Gassackpaket umgebenden Atmosphäre.

Des Weiteren wird das erfindungsgemäße Problem durch eine Faltvorrichtung zum Herstellen eines zumindest einen Gassack und eine den Gassack umgebende Schutzhülle aufweisenden Gassackpaketes für ein Airbagmodul gemäß dem Anspruch 9 gelöst. Die Faltvorrichtung weist dabei ein erstes Werkzeug auf, mit einer Ausnehmung zur Aufnahme des zusammengefalteten Gassackes unter Zwischenlage eines ersten Schützhüllenteils der Schutzhülle, sowie ein zweites Werkzeug, das dazu ausgebildet ist einen zusammengefalteten Gassack gegen das erste Schutzhüllenteil zu drücken, um den Gassack und das am Gassack anliegende erste Schutzhüllenteil in die Ausnehmung einzuführen.

Bevorzugt weist das erste Werkzeug der Faltvorrichtung ein Fixiermittel zum Fixieren des ersten Schutzhüllenteils auf, so dass das mittels des Fixiermittels an dem ersten Werkzeug festgelegte erste Schutzhüllenteil die Ausnehmung des ersten Werkzeuges flächig überdeckt. Vorzugweise ist das zweite Werkzeug dazu ausgebildet, den zusammengefalteten Gassack derart gegen das am ersten Werkzeug fixierte erste Schutzhüllenteil zu drücken, dass dieses unter Dehnung, d.h., Vergrößerung seiner Fläche bei Verringerung seiner Dicke, in der Ausnehmung angeordnet wird. Zum Ausbilden der bereits beschriebenen Eindrückung des Gassackpaketes weist die Ausnehmung des ersten Werkzeuges einen Boden mit einem davon abragenden Bereich auf. Die Ausnehmung selbst als auch jener Bereich des Bodens sind vorzugsweise zylinderförmig ausgebildet und koaxial zueinander orientiert.

Der abragende Bereich kann beweglich zum Boden ausgestaltet sein, um seine Höhe im Wesentlichen senkrecht gegenüber dem Boden variieren zu können. Auf diese Weise lässt sich die Faltvorrichtung besonders leicht für unterschiedliche Eindrückungen (das heißt, für unterschiedlich geformte Gassackpakete) anpassen.

Um auch die Ausnehmung an unterschiedliche Gassackpaketformen bzw. -größen leicht anpassen zu können, weist die Faltvorrichtung vorzugsweise ein Begrenzungselement auf, das insbesondere im Wesentlichen senkrecht zum Boden der Ausnehmung in die Ausnehmung eingebracht werden kann. Dadurch wird der Querschnitt der Ausnehmung verringert, so dass das zu bildende Gassackpaket ebenfalls einen kleineren Querschnitt aufweist.

Weiterhin wird das erfindungsgemäße Problem durch ein Gassackpaket gemäß dem Anspruch 12 gelöst, das einen zusammengefalteten Gassack aufweist und eine den Gassack umgebende, evakuierte Schutzhülle, die aus dehnbaren Schutzhüllenteilen in Form von flexiblen Folien gebildet ist, so dass sich die Schutzhülle nach einem Evakuieren eng an den Gassack anlegt. Vorzugsweise weisen die besagte dehnbare Schutzhüllenteile (bzw. die Schutzhülle) eine Dehnfähigkeit von wenigstens 300% auf. Die Dehnfähigkeit gibt dabei die Längenänderung der Schutzhüllenteile bzw. der Schutzhülle in Prozent unter Last bis zum Versagen (Reißen) an. Dabei sind die Schutzhüllenteile vorzugsweise rückstellfähig, d.h., elastisch ausgebildet und haben somit die Eigenschaft in ihren anfänglichen (ungedehnten) Zustand zurückzukehren. Hierdurch ist die den Gassack einschließende Schutzhülle zumindest abschnittsweise (mit einer der Elastizität entsprechenden Kraft) gegen den Gassack vorgespannt und zieht sich somit um diesen zusammen. Ggf. kann hierdurch auf ein Evakuieren der Schutzhülle verzichtet werden.

Zur Aufnahme eines Gasgenerators bzw. zum Befestigen des Gassackpakets an einem Modulträger weist das Gassackpaket vorzugsweise eine Eindrückung (Ausbuchtung) auf, deren Form durch einen im Gasgenerator angeordneten, konvex ausgeformten, kappenförmigen Diffusor vorgegeben ist.

Weitere Einzelheiten und Vorteile der Erfindung werden bei der nachfolgenden Beschreibung von Ausführungsbeispielen anhand der Figuren deutlich werden.

Es zeigen:
- Fig. 1: eine schematische Schnittansicht einer Faltvorrichtung zum Herstellen eines Gassackpaketes, mit zwei Werkzeugen zum Einschließen eines Gassackes zwischen zwei Schutzhüllenteilen;
- Fig.2: eine schematische Schnittansicht der in der Figur 1 gezeigten Vorrichtung, mit einem zwischen zwei Schutzhüllenteilen angeordneten Gassack;
- Fig. 3: eine schematische Schnittansicht der in den Figuren 1 und 2 gezeigten Vorrichtung, wobei der Gassack mittels eines zweiten Werkzeuges in eine Ausnehmung eines ersten Werkzeuges gedrückt wurde, so dass die beiden Schutzhüllenteile den Gassack umgeben;
- Fig. 4: eine schematische Schnittansicht der in den Figuren 1 bis 3 gezeigten Vorrichtung nach dem Verbinden der beiden Schutzhüllenteile und
- Fig. 5: eine schematische Schnittansicht eines weiteren Ausführungsbeispiels einer Faltvorrichtung.

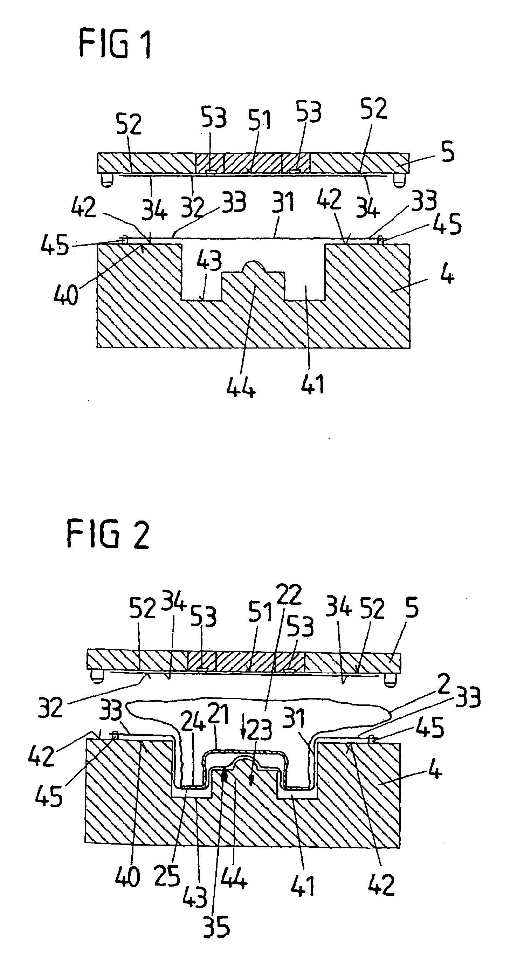

Figur 1 zeigt im Zusammenhang mit den Figuren 2 bis 3 eine Faltvorrichtung zum Herstellen eines zumindest einen Gassack 2 und eine den Gassack 2 umgebende Schutzhülle 3 aufweisenden Gassackpaketes 1 für ein Airbagmodul, wobei die sich die Schutzhülle 3 aus zwei Schutzhüllenteilen 31, 32 zusammensetzt, die aus einer hochelastischen (rückstellfähigen) Folie bestehen, deren Dehnfähigkeit vorzugsweise 300% beträgt.

Die Faltvorrichtung umfasst zumindest ein erstes und ein zweites Werkzeug 4, 5, von denen das erste Werkzeug 4 dazu dient, einen zusammengefalteten Gassack 2 in eine Ausnehmung 41 des zweiten Werkzeuges 5 zu drücken.

Das erste Werkzeug 4 weist einen Körper mit einer planen, eine Ausnehmung 41 aufweisenden Oberfläche 40 auf, die als Unterlage für das darauf auszubreitende erste Schutzhüllenteil 31 ausgebildet ist, wobei das erste Schutzhüllenteil 31 in seinem bestimmungsgemäß bezüglich des ersten Werkzeuges 4 angeordneten Zustand flächenförmig angeordnet ist und die Ausnehmung 41 des ersten Werkzeuges 4 überdeckt. Zum Festlegen des flächenförmig ausgebreiteten ersten Schutzhüllenteils 31 über der Ausnehmung 41 sind an der besagten Oberfläche 40 des ersten Werkzeuges 4 Fixiermittel 45 in Form von von jener Oberfläche 40 abragenden Stiften vorgesehen, die an dem ersten Schutzhüllenteil 31 ausgebildete Durchgangsöffnungen durchgreifen können. Da das erste Schutzhüllenteil 31 dehnbar ausgebildet ist, kann das erste Schutzhüllenteil 31 mittels der Fixiermittel 45 auch unter Spannung, d.h. straff, an der besagten Oberfläche 40 des ersten Werkzeuges 4 festgelegt werden.

Die Ausnehmung 41 ist sacklochförmig ausgebildet, und zwar vorzugsweise zylinderförmig, mit einem Boden 43, der parallel zur besagten Oberfläche 40 des ersten Werkzeuges 4 erstreckt ist. Vom Boden 43 steht entlang der Zylinderachse der zylinderförmigen Ausnehmung 41 ein zylinderförmiger Bereich 44 ab, der zum Ausbilden einer Eindrückung 35 am Gassackpaket 1 dient. Die Ausnehmung 41 bildet also eine Negativform für das herzustellende Gassackpaket 1 aus.

Zum Formen des Gassackpaketes 1 wird der Gassack 2 zunächst auf dem an dem ersten Werkzeug 4 fixierten ersten Schutzhüllenteil 31 angeordnet und zu einem Paket zusammengelegt bzw. gefaltet, so dass das Paket oberhalb der Ausnehmung 41 angeordnet wird. Der Gassack 2 weist einen Innenraum 22 auf, der durch eine Einströmöffnung 23 hindurch mit Gas befüllbar ist. Zum Verwirbeln der in den Innenraum 22 des Gassackes 2 einzuleitenden Gase ist im Innenraum 22 des Gassackes 2 ein kappenförmiger Diffusor 21 angeordnet, der eine zum Innenraum 22 hin konvexe Wölbung aufweist. Der Diffusor 21 weist einen umlaufenden Randbereich 24 auf, der zum Festlegen eines die Einströmöffnung begrenzenden Randbereiches 25 der Einströmöffnung 23 dient, beispielsweise indem der Randbereich 25 der Einströmöffnung 23 durch den Randbereich 24 des Diffusors 21 an einem Träger festgeklemmt wird.

Nach dem Anordnen des Gassackes 2 über der Ausnehmung 41 wird der zusammengefaltete Gassack 2 mittels des zweiten Werkzeuges 5 in die Ausnehmung 41 gedrückt, wobei sich die erste Schutzhülle 31 aufgrund der Fixierung am ersten Werkzeug 4 dehnt und durch den Gassack 2 in die Ausnehmung 41 gedrückt wird. Zusätzlich wird in das erste Schutzhüllenteil 31 und den dahinter befindlichen, zusammengefalteten Gassack 2 eine Eindrückung 35 eingedrückt, da das erste Schutzhüllenteil 31 samt Gassack 2 gegen den abragenden Bereich 44 des Bodens 43 gedrückt wird. Die Eindrückung 35 entspricht der konvexen Wölbung des Diffusors 21.

Zum Überdecken des Gassackes 2 mit einem zweiten Schutzhüllenteil 32 wird dieses an einer dem ersten Werkzeug 4 zugewandten Oberfläche 51 des zweiten Werkzeugs 5 fixiert, so dass es sich flächig entlang jener Oberfläche 51 erstreckt. Zum Halten des zweiten Schutzhüllenteils 32 können an dem zweiten Werkzeug 5 Unterdruckdüsen 53 vorgesehen sein, die das zweite Schutzhüllenteil 32 zum Festhalten ansaugen.

Wird nun das zweite Werkzeug 5 zum Anordnen des Gassackes 2 in der Ausnehmung 41 des ersten Werkzeuges 4 mit seiner Oberfläche 51 unter Zwischenlage der Schutzhüllenteile 31, 32 zur Anlage an die Oberfläche 40 des ersten Werkzeuges 4 gebracht, drückt ein Anlagebereich 52 des zweiten Werkzeuges 5 einen umlaufenden äußersten Randbereich 34 des zweiten Schutzhüllenteils 32 gegen einen umlaufenden äußersten Randbereich 33 des ersten Schutzhüllenteils 31, das sich an einem die Ausnehmung 41 begrenzenden Anlagebereich 42 des ersten Werkzeuges 4 abstützt. Hierdurch wird der Gassack 2 zwischen den beiden Schutzhüllenteilen 31, 32 eingeschlossen.

Zur endgültigen Ausbildung der Schutzhülle 3 wird der von den Schutzhüllenteilen 31, 32 umgebene Innenbereich zunächst evakuiert, so dass sich die hochelastische, dehnbare Schutzhülle (Folie) 3 um den Gassack 2 zusammenzieht. Auf diese Weise schmiegt sich die Schutzhülle 3 eng an den Gassack 2 an und kompaktiert das Gassackpaket 1. Anschließend werden die aneinander liegenden Randbereiche 33, 34 der beiden Schutzhüllenteile 31, 32 miteinander verschweißt. Hierzu ist zumindest einer der beiden Anlagebereiche 33, 34 erhitzbar ausgebildet. Des Weiteren kann mittels des zweiten Werkzeuges 5 eine Aufreißlinie 36 in das zweite Schutzhüllenteil 32 der Schutzhülle 3 eingeprägt werden.

Die so ausgebildete Schutzhülle 3 umgibt mit ihrem ersten Schutzhüllenteil 31 den zusammengefalteten Gassack 2 (samt Diffusor 21) topfartig; die durch das erste Schutzhüllenteil 31 definierte Deckfläche der Schutzhülle 3, die - bezogen auf einen bestimmungsgemäß in einem Kraftfahrzeug angeordneten Zustand - einer zu schützenden Person zugewandt ist, wird durch das mit dem ersten Schutzhüllenteil 31 verbundene zweite Schutzhüllenteil 32 gebildet.

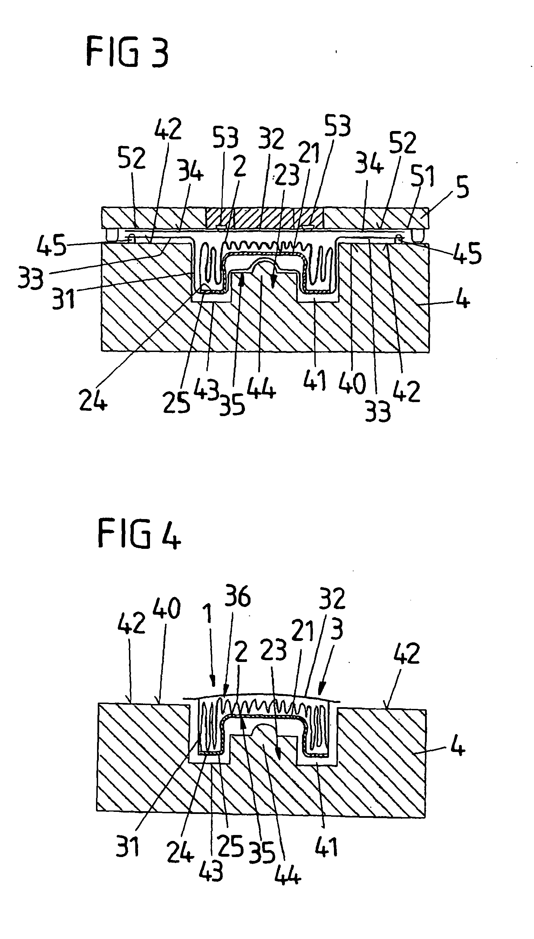

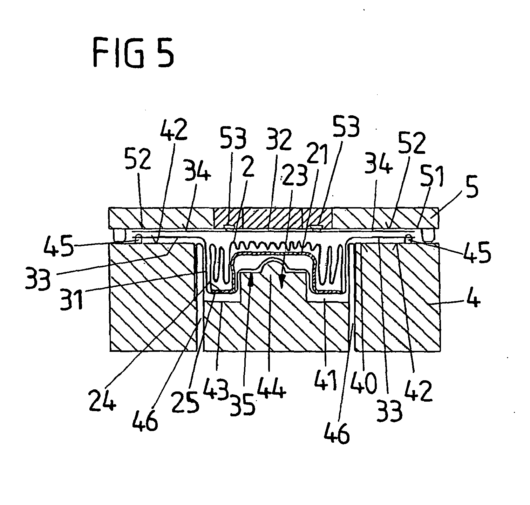

Die Figur 5 zeigt unter Bezugnahme auf die Figuren 1 bis 4 und die diesbezüglichen Erläuterungen ein weiteres Ausführungsbeispiel einer Faltvorrichtung in Schnittansicht, wobei sich der Formungsprozess des Gassackpakets 1 im in der Figur 3 dargestellten Zustand befindet.

Im Unterschied zu der in den Figuren 1 bis 4 dargestellten Faltvorrichtung weist die Faltvorrichtung der Figur 5 einen zusätzlichen hohlzylindrischen Formkörper 46 als Begrenzungselement auf. Dieser wird in die Ausnehmung 41 eingebracht, um deren Querschnitt zu begrenzen. Der Querschnitt der Ausnehmung 41 ist dabei die Entfernung, die sich in der Darstellung der Figuren 1 bis 5 vom linken Rand der Ausnehmung 41 bis zum rechten Rand der Ausnehmung 41 erstreckt.

Durch den Formkörper 46 wird der dem zu formenden Gassackpaket 1 zur Verfügung stehende Raum begrenzt. Dadurch können in der Faltvorrichtung auch Gassackpakete 1 geformt werden, die kleiner als die Ausnehmung 41 sind oder eine andere Form als diese aufweisen.

Der Formkörper 46 muss folglich nicht notwendigerweise hohlzylindrisch ausgebildet sein. Er kann auch eine unregelmäßige hohlkörperförmige Ausgestaltung aufweisen, um für eine spezielle Form des Gassackpakets 1 zu sorgen.

## Patentansprüche

1. Verfahren zur Herstellung eines zumindest einen Gassack (2) und eine den Gassack (2) umgebende Schutzhülle (3) aufweisenden Gassackpaketes (1) für ein Airbagmodul unter Verwendung eines ersten Werkzeuges (4), das eine Ausnehmung (41) zur Aufnahme des Gassackpaketes (1) aufweist, mit den Schritten:
- Überdecken der Ausnehmung (41) mit einem flach ausgebreiteten, ersten Schutzhüllenteil (31) der Schutzhülle (3),
- Zusammenfalten des Gassackes (2), und
- Einführen des zusammengefalteten Gassackes (2) in die Ausnehmung (41) unter Zwischenlage des ersten Schutzhüllenteils (31),
**dadurch gekennzeichnet, daß**
- das erste Schutzhüllenteil (31) beim Einführen des Gassackpaketes (1) in die Ausnehmung (41) unter Dehnung des ersten Schutzhüllenteils (31) in der Ausnehmung (41) angeordnet wird.

2. Verfahren nach Anspruch 1, **dadurch gekennzeichnet, dass** das erste Schutzhüllenteil (31) nach dem Überdecken der Ausnehmung (41) an dem ersten Werkzeug (4) fixiert wird.

3. Verfahren nach Anspruch 2, **dadurch gekennzeichnet, dass** ein zweites, dehnbares Schutzhüllenteil (32) an einer der Ausnehmung (41) zugewandten Oberfläche (51) des zweiten Werkzeuges (5) angeordnet wird.

4. Verfahren nach Anspruch 2 und Anspruch 3, **dadurch gekennzeichnet, dass** ein Anlagebereich (52) eines zweiten Werkzeuges (5) unter Zwischenlage eines umlaufenden äußersten Randbereichs (34) eines zweiten Schutzhüllenteils (32) und eines umlaufenden äußersten Randbereichs (33) des ersten Schutzhüllenteils (31) gegen einen die Ausnehmung (41) begrenzenden Anlagebereich (42) des ersten Werkzeuges (4) gedrückt wird, so dass der Gassack (2) von den beiden Schutzhüllenteilen (31, 32) eingeschlossen wird.

5. Verfahren nach Anspruch 4, **dadurch gekennzeichnet, dass** die Randbereiche (33, 34) der beiden Schutzhüllenteile (31, 32) miteinander verbunden werden, insbesondere miteinander verschweißt werden.

6. Verfahren nach einem der vorhergehenden Ansprüche, **dadurch gekennzeichnet, dass** beim Anordnen des ersten Schutzhüllenteils (31) in der Ausnehmung (41) ein von einem Boden (43) der Ausnehmung (41) in Richtung des Gassackes (2) abragender Bereich (44) gegen das erste Schutzhüllenteil (31) gedrückt wird, so dass an der Schutzhülle (3) unter Dehnung der Schutzhülle (3) eine Eindrückung (35) als eine Aufnahme für einen Gasgenerator ausgebildet wird.

7. Verfahren nach einem der vorhergehenden Ansprüche, **dadurch gekennzeichnet, dass** vor dem Zusammenfalten des Gassackes (2) ein Diffusor (21) in einem Innenraum (22) des Gassackes (2) angeordnet wird.

8. Verfahren nach einem der vorhergehenden Ansprüche, **dadurch gekennzeichnet, dass** die Schützhülle (3) evakuiert wird, wobei sich die Schutzhülle (3) unter Dehnung eng an den zusammengefalteten Gassack (2) anlegt.

9. Faltvorrichtung zum Herstellen eines zumindest einen Gassack (2) und eine den Gassack (2) umgebende Schutzhülle (3) aufweisenden Gassackpaketes (1) für ein Airbagmodul, mit
- einem ersten Werkzeug (4) mit einer Ausnehmung (41) zur Aufnahme des herzustellenden Gassackpaketes (1), **dadurch gekennzeichnet daß**
- einem zweites Werkzeug (5), das dazu eingerichtet und vorgesehen ist, einen zusammengefalteten Gassack (2) gegen ein die Ausnehmung (41) überdeckendes erstes Schutzhüllenteil (31) der Schutzhülle (3) zu drücken, so dass der Gassack (2) unter Zwischenlage des ersten Schutzhüllenteils (31) in der Ausnehmung (41) angeordnet wird.

10. Faltvorrichtung nach Anspruch 9, **dadurch gekennzeichnet, dass** das erste Werkzeug (4) Fixiermittel (45) zum Fixieren des ersten Schutzhüllenteils (31) am ersten Werkzeug (4) aufweist, so dass ein mittels der Fixiermittel (45) am ersten Werkzeug (4) fixiertes erstes Schutzhüllenteil (31) der Schutzhülle (3) die Ausnehmung (41) flächig überdeckt.

11. Faltvorrichtung nach Anspruch 10, **dadurch gekennzeichnet, dass** das zweite Werkzeug (5) dazu ausgebildet ist, den zusammengefalteten Gassack (2) so gegen ein am ersten Werkzeug (4) fixiertes, dehnbares erstes Schutzhüllenteil (31) der Schutzhülle (3) zu drücken, dass dieses unter Dehnung in der Ausnehmung (41) angeordnet wird.

12. Gassackpaket, mit
- einem zusammengefalteten Gassack (2), und
- einer den Gassack (2) umgebenden, durch eine Folie gebildeten Schutzhülle (3), die zur engen Anlage am Gassack (2) dehnbar ausgebildet ist.
**dadurch gekennzeichnet, dass**
die Schutzhülle (3) rückstellfähig ausgebildet ist, so dass die Schutzhülle (3) in einen ungedehnten Zustand zurückkehren kann.

13. Gassackpaket nach Anspruch 12, **gekennzeichnet durch** einen Diffusor (21) zum Verwirbeln von **durch** einen Gasgenerator frei gesetztem Gas.

14. Gassackpaket nach einem der Ansprüche 12 bis13, **dadurch gekennzeichnet, dass** die Schutzhülle (3) eine Dehnfähigkeit von zumindest 300% aufweist.

15. Gassackpaket nach einem der Ansprüche 12 bis14, **dadurch gekennzeichnet, dass** die Schutzhülle (3) durch zwei miteinander verbundene Schutzhüllenteile (31, 32) gebildet ist.

## Claims

1. Method for producing an airbag package (1) for an airbag module using a first tool (4) comprising a recess (41) for receiving the airbag package (1), which airbag package (1) comprises at least an airbag (2) and a protection covering (3) surrounding the airbag (2), the method comprising the steps of:
- covering the recess (41) with an evenly outspread first protection covering part (31) of the protection covering (3),
- folding the airbag (2), and
- inserting the folded airbag (2) into the recess (41) under interposition of the first protection covering part (31),
**characterized in that**
upon insertion of the airbag package (1) into the recess (41), the first protection covering part (31) is arranged in the recess (41) under expansion of the first protection covering part (31).

2. Method according to claim 1, **characterized in that** the first protection covering part (31) is fixed to the first tool (4) after covering the recess (41).

3. Method according to claim 2, **characterized in that** a second expandable protection covering part (32) is arranged at a surface (51) of the second tool (5) facing the recess (41).

4. Method according to claim 2 and 3, **characterized in that** a contact area (52) of a second tool (5) is pressed under interposition of a circumferential outer boundary area (34) of a second protection covering part (32) and a circumferential outer boundary area (33) of the first protection covering part (31) against a contact area (42) of the first tool (4) limiting the recess (41), so that the airbag (2) is enclosed by the two protection covering parts (31, 32).

5. Method according to claim 4, **characterized in that** the two boundary areas (33, 34) of the two protection covering parts (31, 32) are connected to each other, particularly welded to each other.

6. Method according to one of the preceding claims, **characterized in that** upon arranging the first protection covering part (31) in the recess (41) an area (44) protruding from a bottom (43) of the recess (41) towards the airbag (2) is pressed against the first protection covering part (31), so that an indentation (35) as an accommodation for a gas generator is formed in the protection covering (3) under expansion of the protection covering (3).

7. Method according to one of the preceding claims, **characterized in that** prior to folding the airbag (2) a diffuser (21) is arranged in an interior space (22) of the airbag (2).

8. Method according to one of the preceding claims, **characterized in that** the protection covering (3) is evacuated, wherein the protection covering (3) tightly adapts to the folded airbag (2) under expansion of the protection covering (3).

9. Folding device for producing an airbag package (1) for an airbag module, which airbag package comprises at least an airbag (2) and a protection covering (3) surrounding the airbag (2), comprising
- a first tool (4) having a recess (41) for receiving the airbag package (1) to be produced,
**characterized in that**
- a second tool (5) is designed and provided for pressing a folded airbag (2) against a first protection covering part (31) of the protection covering (3) covering the recess (41), so that the airbag (2) is arranged in the recess (41) under interposition of the first protection covering part (31).

10. Folding device according to claim 9, **characterized in that** the first tool (4) comprises fixation means (45) for fixing the first protection covering part (31) to the first tool (4), so that the first protection covering part (31) fixed to the first tool (4) by means of the fixing means (45) two-dimensionally covers the recess (41).

11. Folding device according to claim 10, **characterized in that** the second tool (5) is formed for pressing the folded airbag (2) against an expandable first protection covering part (31) of the protection covering (3) fixed to the first tool (4), so that this first protection covering part (31) is arranged in the recess (41) under expansion.

12. Airbag package, comprising
- a folded airbag (2), and
- a protection covering (3) formed by a film surrounding the airbag (2) that is formed expandable for tightly butting against the airbag (2)
**characterized in that**
the protection covering (3) is formed resilient, so that the protection covering (3) can go back to an unexpanded state.

13. Airbag package according to claim 12, **characterized by** a diffuser (21) for vortexing of gas set free by the gas generator.

14. Airbag package according to one of the claims 112 to 13, **characterized in that** the protection covering (3) comprises an expansibility of at least 300%.

15. Airbag package according to one of the claims 12 to 14, **characterized in that** the protection covering (3) is formed by two protection covering parts (31, 32) connected to each other.

## Revendications

1. Procédé pour la fabrication d'un coussin gonflable formant paquet (1), comprenant au moins un coussin gonflable (2) et une enveloppe de protection (3) qui entoure le coussin gonflable (2), pour un module d'airbag en utilisant un premier outil (4) qui comporte un évidement (41) pour la réception du coussin gonflable formant paquet (1), comprenant les étapes suivantes :
- on recouvre l'évidement (41) avec une première partie d'enveloppe de protection (31), étalée à plat, de l'enveloppe de protection (3),
- on replie le coussin gonflable (2), et
- on introduit le coussin gonflable replié (2) dans l'évidement (41) avec interposition de la première partie d'enveloppe de protection (31),
**caractérisé en ce que**
- la première partie d'enveloppe de protection (31), lors de l'introduction du coussin gonflable formant paquet (1) dans l'évidement (41), est agencée dans l'évidement (41) avec étirement de la première partie d'enveloppe de protection (31).

2. Procédé selon la revendication 1, **caractérisé en ce que** la première partie d'enveloppe (31) est fixée sur le premier outil (4) après le recouvrement de l'évidement (41).

3. Procédé selon la revendication 2, **caractérisé en ce qu'**une seconde partie d'enveloppe de protection (32) est agencée sur une surface (51) du second outil (5) tournée vers l'évidement (41).

4. Procédé selon la revendication 2 et 3, **caractérisé en ce qu'**une zone de contact (52) d'un second outil (5) est pressée contre une zone de contact (42) du premier outil (4) qui délimite l'évidement (41), avec interposition d'une zone de bordure périphérique (34) située autour d'une seconde partie d'enveloppe de protection (32) et d'une zone de bordure périphérique (33) située autour de la première partie d'enveloppe de protection (31), de sorte que le coussin gonflable (2) est enfermé par les deux parties d'enveloppe de protection (31, 32).

5. Procédé selon la revendication 4, **caractérisé en ce que** les zones de bordure (33, 34) des deux parties d'enveloppe de protection (31, 32) sont reliées l'une à l'autre, et sont en particulier soudées l'une à l'autre.

6. Procédé selon l'une des revendications précédentes, **caractérisé en ce que**, lors de l'agencement de la première partie d'enveloppe de protection (31) dans l'évidement (41), une zone (44) qui se dresse d'un fond (43) de l'évidement (41) en direction du coussin gonflable (2) est pressée contre la première partie d'enveloppe de protection (31) de sorte que l'on forme au niveau de l'enveloppe de protection (3) avec étirement de l'enveloppe de protection (3) un creux (35) formant logement pour un générateur de gaz.

7. Procédé selon l'une des revendications précédentes, **caractérisé en ce qu'**avant de replier le coussin gonflable (2), on agence un diffuseur (21) dans un volume intérieur (22) du coussin gonflable (2).

8. Procédé selon l'une des revendications précédentes, **caractérisé en ce que** l'enveloppe de protection (3) est vidée d'air, de sorte que l'enveloppe de protection (3) s'applique avec étirement de manière intime contre le coussin gonflable replié (2).

9. Dispositif de pliage pour réaliser un coussin gonflable formant paquet (1) qui comprend au moins un coussin gonflable (2) et une enveloppe de protection (3) qui entoure le coussin gonflable (2), pour un module d'airbag, comprenant
- un premier outil (4) avec un évidement (41) pour recevoir le coussin gonflable en paquet (1) à réaliser,
**caractérisé en ce qu'**
- un second outil (5) est conçu et prévu pour presser un coussin gonflable replié (2) contre une première partie d'enveloppe de protection (31), de l'enveloppe de protection (3), qui recouvre l'évidement (41), de sorte que le coussin gonflable (2) est agencé dans l'évidement (41) avec interposition de la première partie d'enveloppe de protection (31).

10. Dispositif de pliage selon la revendication 9, **caractérisé en ce que** le premier outil (4) comprend des moyens de fixation (45) pour la fixation de la première partie d'enveloppe de protection (31) sur le premier outil (4), de sorte qu'une première partie d'enveloppe de protection (31), de l'enveloppe de protection (3), fixée sur le premier outil (4) à l'aide des moyens de fixation (45) recouvre à plat l'évidement (41).

11. Dispositif de pliage selon la revendication 10, **caractérisé en ce que** le second outil (5) est réalisé pour presser le coussin gonflable replié (2) contre une première partie d'enveloppe de protection (31), de l'enveloppe de protection (3), étirable et fixée sur le premier outil (4), de telle manière que cette partie d'enveloppe de protection est agencée avec étirement dans l'évidement (41).

12. Coussin gonflable formant paquet, comprenant
- un coussin gonflable replié (2), et
- une enveloppe de protection (3) réalisée par une feuille et entourant le coussin gonflable (2), réalisée de manière étirable pour venir en contact intime contre le coussin gonflable (2),
**caractérisé en ce que**
l'enveloppe de protection (3) est réalisée avec possibilité de rappel, de sorte que l'enveloppe de protection (3) est capable de retourner dans un état non étiré.

13. Coussin gonflable formant paquet selon la revendication 12, **caractérisé par** un diffuseur (21) pour faire tourbillonner un gaz libéré par un générateur de gaz.

14. Coussin gonflable formant paquet selon l'une des revendications 12 et 13, **caractérisé en ce que** l'enveloppe de protection (3) présente une capacité d'étirement d'au moins 300 %.

15. Coussin gonflable formant paquet selon l'une des revendications 12 à 14, **caractérisé en ce que** l'enveloppe de protection (3) est formée par deux parties d'enveloppe de protection (31, 32) reliées l'une à l'autre.
